# EUROPÄISCHE PATENTSCHRIFT

(11) **EP 4 088 090 B1**
(45) Veröffentlichungstag und Bekanntmachung des Hinweises auf die Patenterteilung: **15.05.2024**
(21) Anmeldenummer: 20829927.1
(22) Anmeldetag: 18.12.2020
(51) Int. Cl.: G01D 11/30

(54) **STUTZENANORDNUNG UND PROZESSBEHÄLTER**
PORT ARRANGEMENT AND PROCESS VESSEL
AGENCEMENT DE MANCHON ET RECIPIENT DE TRAITEMENT

(30) Priorität: 19.12.2019 CH 16682019
(43) Veröffentlichungstag der Anmeldung: 16.11.2022
(73) Patentinhaber: Edelstahl Maurer AG, 4147 Aesch (CH)
(72) Erfinder: MAURER, Emanuel, 4147 Aesch (CH)
(74) Vertreter: Latscha Schöllhorn Partner AG
(86) Internationale Anmeldenummer: PCT/EP2020/087054
(87) Internationale Veröffentlichungsnummer: WO 2021/123191

(56) Entgegenhaltungen:
- EP-A1- 0 174 417
- DE-A1-102012 203 355
- US-A1- 2010 230 963

## Beschreibung

### Technisches Gebiet

Die Erfindung betrifft eine Stutzenanordnung gemäss dem Oberbegriff des unabhängigen Anspruchs 1 sowie einen Prozessbehälter mit einer solchen Stutzenanordnung.

Derartige Stutzenanordnungen mit einem stationären Stutzenelement kommen regelmässig in Anlagen der pharmazeutischen, der biotechnologischen, der chemischen und der Lebensmittelindustrie zum Einsatz, wie beispielsweise in Tanks, Kesseln, Reaktoren, Rohrleitungen und ähnlichen Prozessbehältern.

### Stand der Technik

Neben anderen Verbindungssystemen, wie sie beispielsweise in der US 2010/0230963 A1 und der EP 0 174 417 A1 beschrieben sind, ist gemeinhin bekannt als standardmässige Anschlussverbindung für den Einbau von Sensoren oder Armaturen in Prozessbehälter ist der sogenannte Ingoldstutzen, wie beispielsweise einer in der DE 10 2012 203 355 A1 beschrieben ist. Ingoldstutzen weisen ein in die Behälterwand fest eingeschweisstes Stutzenelement auf, welches typischerweise eine Durchgangsbohrung mit einem Innendurchmesser von 25 mm oder von 40 mm und einer Toleranz H7 ("25H7" bzw. "40H7") umfasst. Die Durchgangsbohrung nimmt den Sensor oder die Armatur auf, die mit einer Überwurfmutter am Sensor- oder Armaturensockel an ein prozessabseitiges Aussengewinde des Ingoldstutzens angeschraubt wird.

Die bekannten Ingoldstutzen weisen allerdings ein erhebliches Sicherheitsrisiko dahingehend auf, dass bei einem Ausbau der Armatur bei noch vorhandenem Prozessdruck im Prozessbehälter, der für die Abdichtung verantwortliche O-Ring an der Armatur während des Herausziehens aus der Durchgangsbohrung bis zum Schluss mit der Innenwand der Durchgangsbohrung abdichtet. Dies kann dazu führen, dass beim endgültigen Lösen der Überwurfmutter die Armatur plötzlich wie ein Geschoss weggeschleudert wird und das Prozessmedium mit ggf. schwerwiegenden Folgen unter Druck aus der offenen Durchgangsbohrung austritt. Zur Verminderung dieses Sicherheitsrisikos sind beispielsweise aus der DE 10 2012 203 355 B4 auch Sicherheits-Ingoldstutzen bekannt, bei denen erst der Prozessdruck abgebaut wird, bevor die Überwurfmutter vollständig gelöst ist.

Zudem kommt es beim Ein- und Ausbauen bzw. Auswechseln der einzelnen Armaturen oder Sensoren immer wieder zu unerwünschten Deformationen oder Beschädigung des 25H7- bzw. 40H7-Innendurchmessers beziehungsweise der Durchgangsbohrung oder des Stutzenrandes von eingeschweissten Ingoldstutzen. Das kann dazu führen, dass die Armaturen beziehungsweise Sensoren nicht mehr sauber angeschlossen werden können oder dass die Dichtheit des Anschlusses gefährdet ist, was insbesondere bei aseptischen Prozessbehältern erhebliche Schwierigkeiten nach sich ziehen kann. Um dies zu verhindern beziehungsweise dem zu begegnen, muss typischerweise das beschädigte Stutzenelement herausgeschnitten und durch ein neues, unbeschädigtes eingeschweisstes Stutzenelement ersetzt werden. Dies ist häufig technisch anspruchsvoll, sodass ein Montagefachmann benötigt wird, und unterbricht den Betrieb des Prozessbehälters für eine verhältnismässig lange Dauer.

Überdies verändert sich beim Einschweissen von Stutzenelementen die Form des Innendurchmessers bzw. der Durchgangsbohrung in unerwünschter Weise, was üblicherweise eine Überprüfung der runden Form der Durchgangsbohrung mit einem spezifischen Messwerkzeug nach sich zieht. Um solchen Veränderungen zu begegnen, werden häufig die Stutzenelemente mit einem leichten Untermass wie beispielsweise 24.8 mm oder 39.8 mm Innendurchmesser vorgesehen und nach dem Einschweissen mit einem spezifischen Werkzeug wie beispielsweise einer Reibale auf 25H7 beziehungsweise 40H7 ausgerieben. Dies zieht wiederum einen zusätzlichen Arbeitsaufwand nach sich und bedarf wiederum spezifisch geschulten Personals. Auch ist es bei einem solchen Ausreiben typischerweise nicht möglich, die Oberfläche der Durchgangsbohrung bevorzugt glatt auszuformen.

Darüber hinaus kommt es bei den bekannten Stutzenelementen teilweise auch zu Produktverunreinigungen durch eine beschädigte oder gelöste Mutter bzw. durch Abrieb beispielsweise von Dichtungen, welche(r) in den Prozessbehälter hineingelangt. Dies kann erhebliche Schwierigkeiten bei der Gewährleistung aseptischer Verhältnisse mit sich bringen.

Der vorliegenden Erfindung liegt daher die Aufgabe zu Grunde, eine Stutzenanordnung vorzuschlagen, welche eine verbesserte Prozesssicherheit aufweist, welche eine vergleichsweise präzise Geometrie gewährleisten kann, welche effizient herstellbar ist und welche eine sichere und einfache Handhabung beziehungsweise Wartung ermöglicht.

### Darstellung der Erfindung

Die Aufgabe wird erfindungsgemäss durch einen Stutzenanordnung gelöst, wie sie im unabhängigen Anspruch 1 definiert ist, sowie durch einen Prozessbehälter, wie er im unabhängigen Anspruch 13 definiert ist. Vorteilhafte Ausführungsvarianten der Erfindung ergeben sich aus den abhängigen Ansprüchen.

Das Wesen der Erfindung besteht im Folgenden: Eine Stutzenanordnung zum Prozessanschluss von insbesondere Armaturen oder Sensoren umfasst ein erstes, stationäres Stutzenelement und ein zweites, auswechselbares Stutzenelement, welches derart ausgebildet ist, dass es jedenfalls teilweise von einer Aufnahmeöffnung des ersten, stationären Stutzenelements aufnehmbar ist. Das zweite, auswechselbare Stutzenelement weist ein Aussengewinde zum Aufbringen einer Überwurfmutter der Armatur oder des Sensors auf. Weiter umfasst die Stutzenanordnung zumindest eine Haltevorrichtung beziehungsweise Klemmvorrichtung, welche zum Zusammenhalten des ersten, stationären Stutzenelements und des zweiten, auswechselbaren Stutzenelements ausgebildet ist.

Der Begriff "stationär" bezeichnet im Kontext der vorliegenden Erfindung generell eine fixe beziehungsweise unlösbare Verbindung des ersten Stutzenelements mit einem Prozessbehälter. Eine Verbindung wird dann als unlösbar bezeichnet, wenn sie nur durch Beschädigung oder Zerstörung der verbundenen Teile oder des jeweiligen Verbindungselements wieder getrennt werden kann. Üblicherweise ist das erste Stutzenelement mit dem Prozessbehälter verschweisst und auf diese Weise stationär.

Der Begriff "auswechselbar" bezeichnet im Zusammenhang mit der Erfindung generell eine lösbare Verbindung, bei der das entsprechende Verbindungselement nicht beschädigt beziehungsweise zerstört werden muss, um die Verbindung zu lösen. Mit anderen Worten kann das zweite Stutzenelement - bei abgenommener Haltevorrichtung - im Wesentlichen ohne grösseren Kraftaufwand und ohne Einsatz eines Werkzeugs aus dem ersten Stutzenelement entnommen/gelöst werden bzw. in letzteres eingeführt werden.

Unter dem Begriff "Zusammenhalten" wird vorliegend ein form- und/oder kraftschlüssiger Sitz der zumindest einen Haltevorrichtung gegenüber dem ersten und dem zweiten Stutzenelement verstanden. Hierbei können je nach Ausbildung der Verbindungsstruktur zwischen dem ersten, stationären und dem zweiten, auswechselbaren Stutzenelement beispielsweise ein, zwei oder mehrere Haltevorrichtungen, wie etwa Halteringe, Klemmringe, Klemmhaken, Rohrhalteklemmen, Handspannvorrichtungen und/oder Federklemmen vorgesehen werden.

Die erfindungsgemässe Stutzenanordnung ermöglicht, dass beim Austausch von Armaturen bzw. Sensoren an Prozessbehältern, welcher in der Praxis zur Kontrolle diverser Prozessparameter regelmässig nötig ist, sichergestellt wird, dass keine derart grossen Kräfte auf das am Behälter fest angebrachte Stutzenelement ausgeübt werden müssen, dass damit eine Beschädigung oder Deformation desselben einhergeht. Die zumindest eine Haltevorrichtung erlaubt einen sicheren und einfach zu lösenden Zusammenhalt des ersten und zweiten Stutzenelements.

Durch den mehrteiligen zusammensetz- beziehungsweise klemmbaren und bevorzugt zusätzlich formschlüssig verbindbaren Aufbau der erfindungsgemässen Stutzenanordnung kann auch der Eintrag von abgelösten Teilen wie beispielsweise Montagemuttern und Verunreinigungen wie beispielsweise Abrieb von Dichtungen in den Prozessbehälter wirksam unterbunden werden. Zudem kann bei Bedarf das zweite Stutzenelement auf einfache Weise ausgewechselt werden, ohne dass das erste Stutzenelement vom Prozessbehälter entfernt werden muss. Dieses Auswechseln kann werkzeuglos durch ein Lösen der Haltevorrichtung, ein Entfernen des beschädigten oder beeinträchtigten zweiten Stutzenelements, ein Einsetzen eines neuen unversehrten zweiten Stutzenelements und erneutes Spannen der Haltevorrichtung erreicht werden. Spezifische Montage oder Fachkenntnisse sind dazu nicht oder nur in untergeordnetem Umfang notwendig. Auch kann dieses Auswechseln vergleichsweise schnell erfolgen, sodass Betriebsunterbrüche stark reduziert oder gar vermieden werden können.

Weiter kann durch die Einsetzbarkeit des zweiten Stutzenelements vermieden werden, dass die Geometrie der Durchbohrung wie beispielsweise eine 25H7 oder eine 40H7 Geometrie beeinträchtigt wird. Ein Ausreiben des zweiten Stutzenelements nach seiner Montage ist nicht notwendig, was den Montageaufwand und die Montagezeit weiter reduzieren kann. Indem das zweite Stutzenelement gerade mit der quasi perfekten Innengeometrie hergestellt werden kann, kann auch die Oberfläche der Durchgangsbohrung äusserst präzise dimensioniert und glatt ausgeführt sein. Beispielsweise kann sie gehont sein. Die präzise Dimensionierung oder Formung des zweiten Stutzenelements ermöglicht die Gewährleistung einer sicheren Dichtheit und eine quasi hundertprozentige Rundheit der Durchgangsbohrung.

Die Stutzenanordnung und insbesondere sein zweites Stutzenelement kann als ein Ingoldstutzen und insbesondere als ein Sicherheits-Ingoldstutzen ausgebildet sein. Solche Ingoldstutzen können für viele Prozessbehälter und dabei verwendeten Armaturen und Sensoren vorteilhaft sein. Unter anderem erlauben sie ein effizientes und dichtes Montieren beziehungsweise Demontieren von Sensoren und Armaturen in einer standardisierten Art und Weise.

Vorzugsweise ist das erste, stationäre Stutzenelement mit einem umlaufenden Flansch ausgestattet. Insbesondere kann das erste Stutzenelement als ein sogenannter TC-Stutzen gemäss der Deutschen Industrienorm (DIN) 32676 ausgebildet sein. Ein solches erstes Stutzenelement ermöglicht, dass bei Bedarf alternativ zum zweiten Stutzenelement ein anderes Bauteil wie beispielsweise eine Armatur oder ein Sensor direkt an das erste Stutzenelement angeschlossen werden kann. Dabei kann dieses Bauteil mit der Haltevorrichtung oder auf anderer Art und Weise am ersten Stutzenelement befestigt werden.

Das zweite, auswechselbare Stutzenelement weist bevorzugt einen umlaufenden Flansch auf, welcher bevorzugt zumindest einen Vorsprung oder zumindest eine Aussparung umfasst, der/die mit zumindest einer gegengleichen Aussparung oder mit zumindest einem gegengleichen Vorsprung eines umlaufenden Flansches des ersten, stationären Stutzenelements einen Formschluss bildet. Auf diese Weise kann für die Haltevorrichtung eine optimale Halterungsstruktur geschaffen werden, so dass eine besonders gute Klemmwirkung erzielt werden kann. Zudem kann durch den Formschluss eine Bewegung quer zur Stutzenachse unterbunden werden, was insbesondere bei einer horizontalen oder abgeschrägten Ausrichtung der Stutzenachse erhebliche Vorteile bieten kann. Der Vorsprung und die korrespondierende Aussparung können umlaufend ausgestaltet sein, es können aber auch jeweils zwei oder mehrere einzelne, voneinander beabstandete Vorsprünge und Aussparungen vorgesehen sein, welche zueinander korrespondierend ausgebildet sind. Der Vorsprung und die Aussparung können eine Nut-und-Feder-Verbindung der beiden umlaufenden Flansche der ersten und zweiten Stutzenelemente ermöglichen.

Bevorzugt weisen der umlaufende Flansch des ersten, stationären Stutzenelements und der umlaufende Flansch des zweiten, stationären Stutzenelements jeweils eine Abschrägung auf, so dass sich im montierten Zustand der zusammengesetzte Flansch nach aussen hin verjüngt. Hierdurch kann wiederum der Sitz der Haltevorrichtung und somit dessen Klemmwirkung weiter verbessert werden.

Die Haltevorrichtung der Stutzenanordnung kann als Klemmvorrichtung ausgebildet sein. Vorzugsweise umschliesst sie dazu den Flansch des ersten, stationären Stutzenelements und den Flansch des zweiten, auswechselbaren Flanschelements klemmend und presst die beiden Bauteile fest zusammen. Mittels dieser Massnahme kann die Betriebssicherheit der Stutzenanordnung weiter erhöht werden.

Vorzugsweise umfasst die Aufnahmeöffnung des ersten, stationären Stutzenelements eine Einlassöffnung, welche derart ausgebildet ist, dass eine Armatur oder ein Sensor durch sie hindurchführbar ist. Die Einlassöffnung ist bevorzugt prozessseitig im Boden des ersten, stationären Stutzenelements vorgesehen und bildet den Durchgang durch die Wand des Prozessbehälters.

Vorzugsweise umfasst das zweite, auswechselbare Stutzenelement eine Durchgangsbohrung, welche mit der Einlassöffnung des ersten, stationären Stutzenelements korrespondiert. Hierdurch wird ein sicheres Einbringen der Armatur oder des Sensors in den Prozessbehälter gewährleistet.

Bevorzugt weist die Durchgangsbohrung des zweiten, auswechselbaren Stutzenelements einen abgeschrägten Übergangsbereich zwischen einem Bohrungsabschnitt mit einem grösseren Innendurchmesser und einem Bohrungsabschnitt mit einem kleineren Innendurchmesser auf, wobei der Bohrungsabschnitt mit dem kleineren Innendurchmesser fluchtend angrenzt an die Einlassöffnung des ersten, stationären Stutzenelements. Vorzugsweise umfasst dabei der kleinere Innendurchmesser 25 mm mit einer Toleranz von H7 oder 40 mm mit einer Toleranz von H7. Dies ist im Hinblick auf eine Verwendung als Ingold-Stutzen der Regelfall. Der grössere Innendurchmesser umfasst dann bevorzugt etwa 27 mm. Eine derartige Ausgestaltung ergibt eine Sicherheitsfunktion, welche dafür sorgt, dass bei einem Ausbau der Armatur oder des Sensors unter entsprechendem Abschrauben der Überwurfmutter die Armatur bzw. der Sensor langsam aus der Durchgangsbohrung des zweiten, auswechselbaren Stutzenelements herausgehoben wird.

Dabei wandert der regelmässig radial mit der Innenwand der Durchgangsbohrung abdichtende O-Ring der Armatur bzw. des Sensors vom Dichtbereich (25H7- oder 40H7-Innendurchmesser) in den im Innendurchmesser erweiterten Anschlussbereich. Ein allfälliger Überdruck und Prozessmedium können nun um den nicht mehr gegenüber der weiter außenliegenden Innenwand der Durchgangsbohrung abdichtenden O-Ring herum austreten. Da jedoch zu diesem Zeitpunkt die Überwurfmutter des Sensor- oder Armaturensockels noch auf das Außengewinde des zweiten, auswechselbaren Stutzenelements aufgeschraubt ist und ferner das Gewinde wie ein drosselndes Labyrinth wirkt, können Überdruck und/oder Prozessmedium kontrolliert austreten, so dass sie keine besonders hohe Gefährdung mehr darstellen. Der Bediener merkt hierdurch rechtzeitig, dass noch Überdruck auf dem System ist und kann gegebenenfalls die Überwurfmutter wieder festziehen, so dass der Prozess wieder abgedichtet wird.

Vorzugsweise ist der Aussendurchmesser des von dem ersten, stationären Stutzenelement aufgenommenen Teils des zweiten, auswechselbaren Stutzenelements kleiner als der Innendurchmesser der Aufnahmeöffnung des ersten, stationären Stutzenelements. Mittels dieser Ausgestaltung kann sichergestellt werden, dass zwischen die Aussenwand des zweiten, auswechselbaren Stutzenelements und die Innenwand des ersten, stationären Stutzenelements noch ein Dichtelement beziehungsweise ein Teil eines Dichtelements einbringbar ist.

Bevorzugt ist nämlich in dem Ringspalt zwischen dem ersten, stationären Stutzenelement und dem zweiten, auswechselbaren Stutzenelement, jedenfalls teilweise, ein ringartiges Dichtungselement angeordnet. Das ringartige Dichtungselement bildet bevorzugt einen Sitz für das zweite, auswechselbare Stutzenelement aus, wobei es im montierten Zustand auch dessen Seitenwände jedenfalls im unteren Bereich dichtend umgibt. Weiter vorzugsweise weist das ringartige Dichtungselement einen umlaufenden Wulst auf, welcher von korrespondierenden Nuten an der Unterseite des zweiten, auswechselbaren Stutzenelements und im Aufnahmeboden des ersten, stationären Stutzenelements dichtend aufgenommen wird. Mittels der vorbeschriebenen Ausgestaltung des ringartigen Dichtelements kann eine äusserst effektive Abdichtung zwischen dem ersten, stationären Stutzenelement und dem zweiten, auswechselbaren Stutzenelement geschaffen werden, so dass insbesondere kein Prozessmedium zwischen den beiden Bauteilen austreten kann.

Ein anderer Aspekt der Erfindung betrifft einen Prozessbehälter mit zumindest einer Stutzenanordnung, wie sie vorstehend beschrieben wurde sowie ggf. einer Armatur oder einem Sensor. Dabei ist das erste, stationäre Stutzenelement in eine Wandung des Prozessbehälters eingeschweisst.

Mit dem erfindungsgemässen Prozessbehälter können die oben im Zusammenhang mit der erfindungsgemässen Stutzenanordnung und deren bevorzugten Ausführungsformen beschriebenen Vorteile und Effekte auf effiziente Weise in der Praxis realisiert werden.

Bevorzugt ist an einem ihrem/seinem Sockel zugewandten Ende der Armatur oder des Sensors ein Sprengring angeordnet, mittels welchem die Armatur oder der Sensor beim Herausdrehen der Überwurfmutter zurückgeschoben wird. Diese Massnahme dient der vorstehend beschriebenen Sicherheitsfunktion, da ein kontrolliertes Zurückschieben der Armatur oder des Sensors ermöglicht wird.

Bevorzugt weist das erste, stationäre Stutzenelement eine aufwärtige Neigung (Steigung) von etwa 15 % gegenüber einer Senkrechten zur Behälterwand auf. Stutzenanordnungen wie sie Gegenstand der vorliegenden Erfindung sind, werden sowohl für den geraden als auch für den schrägen Einbau konzipiert. Der Schrägeinbau kommt regelmässig bei vertikal verlaufenden Wandungen in Prozessbehältern zur Anwendung. Da die meisten flüssigkeitsbasierten elektrochemischen Sensoren einen Einbau mit einer Steigung von 15° fordern, wird das erste, stationäre Stutzenelement in seinem prozessseitigen Anschlussbereich entsprechend abgeschrägt. Die damit hervorgerufene Schräglage des Sensors dient bei flüssigkeitsbasierten Sensoren, beispielsweise für die pH-Messung, zur Vermeidung von Luftblasen in der Sensorspitze.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung. Insbesondere wird im Folgenden die erfindungsgemässe Stutzenanordnung unter Bezugnahme auf die beigefügten Zeichnungen anhand von Ausführungsbeispielen detaillierter beschrieben. Es zeigen:
- Fig. 1:: eine Explosionsdarstellung einer erfindungsgemässen Stutzenanordnung und einer Armatur mit Überwurfmutter im Querschnitt;
- Fig. 2:: eine erfindungsgemässe Stutzenanordnung im montierten Zustand mit eingesetzter Armatur und aufgeschraubter Überwurfmutter im Querschnitt;
- Fig. 3:: eine perspektivische Aussenansicht einer erfindungsgemässen Stutzenanordnung im montierten Zustand mit eingesetzter Armatur (bzw. Sensor) und aufgeschraubter Überwurfmutter;
- Fig. 4:: eine Querschnittsdarstellung einer erfindungsgemässen Stutzenanordnung mit eingesetzter Armatur (bzw. Sensor) und aufgeschraubter Überwurfmutter im schräg montierten Zustand; und
- Fig. 5:: ein erfindungsgemässer Prozessbehälter mit drei schräg montierten Stutzenanordnungen mit eingesetzter Armatur und aufgeschraubter Überwurfmutter.

### Weg(e) zur Ausführung der Erfindung

Bestimmte Ausdrücke können in der folgenden Beschreibung aus praktischen Gründen verwendet werden und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Figuren dargestellt verwendet. Diese räumlichen Relativangaben umfassen auch andere Positionen und Ausrichtungen als die in den Figuren dargestellten. Zum Beispiel wenn ein in den Figuren dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Figuren und der zugehörigen Beschreibung der verschiedenen Aspekte und Ausführungsbeispiele zu vermeiden, sollen bestimmte Merkmale als gemeinsam für verschieden Aspekte und Ausführungsbeispiele verstanden werden. Das Weglassen eines Aspekts in der Beschreibung oder einer Figur lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Figuren stehen für ähnliche oder gleiche Elemente.

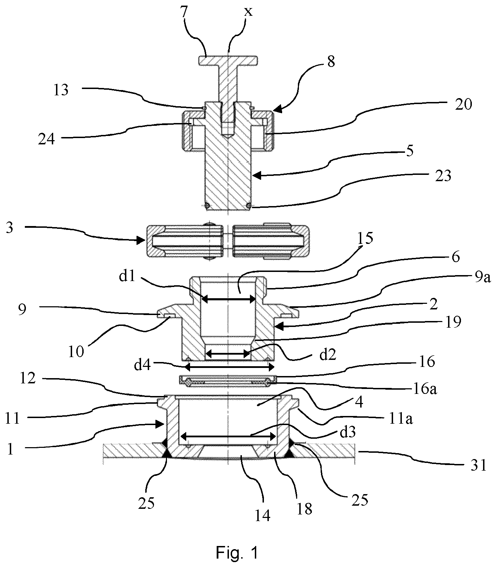

**Fig. 1** veranschaulicht eine erfindungsgemässe Stutzenanordnung umfassend ein erstes, stationäres Stutzenelement 1, ein zweites, auswechselbares Stutzenelement 2 und eine als Klemmvorrichtung 3 ausgebildete Haltervorrichtung in auseinandergebautem Zustand zusammen mit einer beispielhaften Armatur 5, welche durch die Stutzenanordnung hindurch geführt werden soll.

Das erste, stationäre Stutzenelement 1 ist in die Wandung 31 eines hier nicht gezeigten Prozessbehälters eingeschweisst, was anhand der Schweissnähte 25 verdeutlicht wird. Das erste, stationäre Stutzenelement 1 weist eine Aufnahmeöffnung 4 mit einem Innendurchmesser d3 auf. Weiterhin umfasst das erste, stationäre Stutzenelement 1 einen Aufnahmeboden 18, welcher wiederum eine Einlassöffnung 14 definiert, welche einen Zugang zum Inneren des Prozessbehälters ermöglicht. Bevorzugt erweitert sich die Einlassöffnung 14 in Richtung der Innenseite des Prozessbehälters. Die Wandstärke des Aufnahmebodens 18 entspricht im Wesentlichen der Wandstärke der Wandung 31. An seinem oberen Ende weist das erste, stationäre Stutzenelement 1 einen umlaufenden Flansch 11 auf, welcher auf seiner Oberseite einen umlaufenden Vorsprung 12 umfasst. Der Flansch 12 weist an seiner Unterseite eine nach aussen weisende Abschrägung 11a auf.

Weiterhin ist ein ringartiges Dichtungselement 16 mit einem Wulst 16a vorgesehen, welches in die Aufnahmeöffnung 4 einbringbar ist und vom Aufnahmeboden 18 aufgenommen wird. Das ringartige Dichtungselement 16 dient der Abdichtung gegenüber dem zweiten, auswechselbaren Stutzenelement 2. Dieses wird jedenfalls in seinem unteren Bereich von der Aufnahmeöffnung 4 des ersten, stationären Stutzenelements 1 aufgenommen. Es weist hier regelmässig einen Aussendurchmesser d4 auf, welcher kleiner ist als der Innendurchmesser d3 der Aufnahmeöffnung 4. Bevorzugt verbleibt etwas Spiel zwischen dem aufgenommenen Bereich des zweiten, auswechselbaren Stutzenelements 2 und der Innenwand des ersten, stationären Stutzenelements 1.

Das zweite, auswechselbare Stutzenelement 2 umfasst weiterhin einen umlaufenden Flansch 9, an dessen Unterseite eine umlaufende Aussparung 10 eingebracht ist, welche mit dem Vorsprung 12 auf der Oberseite des Flansches 11 des ersten, stationären Stutzenelements 1 formschlüssig korrespondiert. Der Flansch 9 weist an seiner Oberseite eine nach aussen weisende Abschrägung 9a auf. Oberhalb des Flansches 9 weist das zweite, auswechselbare Stutzenelement 2 ein Aussengewinde 6 auf, welches mit einem entsprechenden Innengewinde 20 einer Überwurfmutter 8 einer zu befestigenden Armatur bzw. eines Sensors 5 zusammenwirken soll.

Das zweite, auswechselbare Stutzenelement 2 umfasst eine Durchgangsbohrung 15, welche einen oberen Bereich mit einem Innendurchmesser d1 umfasst sowie einen unteren Bereich mit einem Innendurchmesser d2. Der Innendurchmesser d1 ist dabei etwas grösser bemessen als der Innendurchmesser d2. Zwischen den beiden Bereichen ist eine entsprechende Übergangsabschrägung 19 vorgesehen. Diese Ausgestaltung dient der im allgemeinen Teil der Beschreibung erläuterten Sicherheitsfunktion gegen ein verfrühtes und ggf. unkontrolliertes Lösen der Überwurfmutter 8, d.h. wenn sich noch Überdruck auf dem System befindet. Der Innendurchmesser d2 beträgt regelmässig 25 mm bei einer Toleranz von H7 oder 40 mm bei einer Toleranz von H7 (d.h. bei Verwendung als Ingold-Stutzen). Der Innendurchmesser d1 beträgt dann etwa 27 mm. Des Weiteren fluchtet die Durchgangsbohrung 18 mit der Einlassöffnung 14 bzw. deren prozessabgewandten Oberseite.

Die Armatur 5 umfasst einen Sockel 24, auf welchen die Überwurfmutter 8 aufgebracht ist. Am oberen Ende der Armatur 5 ist ein Sprengring 13 vorgesehen, über welchen beim Herausdrehen der Überwurfmutter die Armatur 5 zurückgeschoben wird. Dabei verlässt dann der am unteren Ende der Armatur 5 angeordnete O-Ring 23 den Bereich der Durchgangsbohrung 15 mit dem (kleineren) Innendurchmesser d2, so dass keine Dichtwirkung mehr vorliegt und Überdruck bzw. Prozessmedium ggf. kontrolliert entweichen kann. In die Oberseite der Armatur ist ein Griffteil 7 eingebracht mittels welchem die Armatur 5 bewegt werden kann.

Die Klemmvorrichtung 3 dient dem sicheren Zusammenhalt des ersten, stationären Stutzenelements 1 und des zweiten, auswechselbaren Stutzenelements 2 im Bereich der Abschrägungen 9a und 11a der beiden Flansche 9 und 11. Die Längsachse der Armatur 5 wird schliesslich mit x bezeichnet.

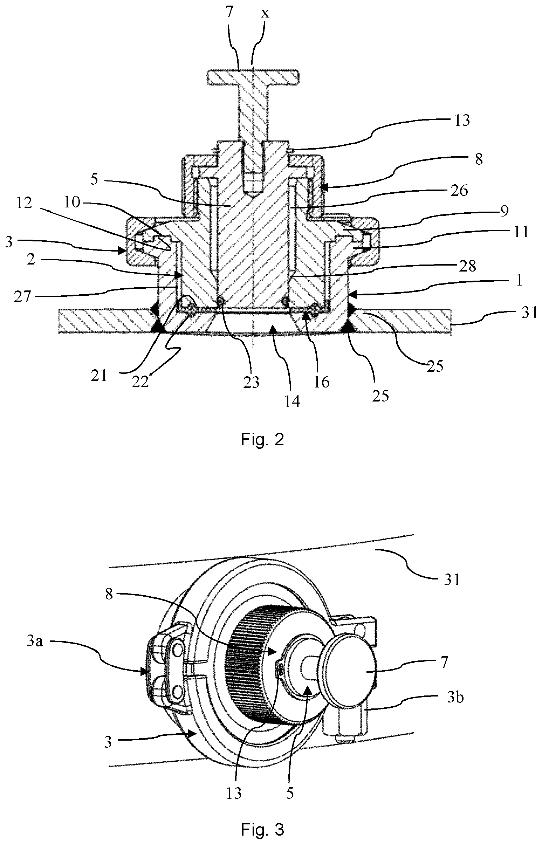

**Fig. 2** veranschaulicht die erfindungsgemässe Stutzenanordnung und die Armatur 5 in zusammengebautem Zustand.

Man erkennt, dass der Flansch 11 des ersten, stationären Stutzenelements 1 und der Flansch 9 des zweiten Stutzenelements 2 nunmehr formschlüssig ineinandergreifen, d.h. der Flansch 9 liegt auf dem Flansch 11 auf und der Vorsprung 12 des Flansches 11 greift formschlüssig in die Aussparung 10 des Flansches 9 ein. Von aussen her werden die beiden Flansche 9 und 11 von der Klemmvorrichtung 3 zusammengehalten bzw. zusammengepresst, wobei die vorbeschriebenen Abschrägungen 9a und 11a der beiden Flansche 9 und 11 für einen optimalen Klemmsitz der Klemmvorrichtung 3 sorgen.

Zwischen der Armatur 5 und dem zweiten, auswechselbaren Stutzenelement 2 bildet sich im Bereich der Durchgangsbohrung 15 ein Ringspalt 26 aus, welcher auf die unterschiedlichen Innendurchmesser d1 und d2 der Durchgangsbohrung 15 zurückgeht (vgl. **Fig. 1** oben). Der O-Ring 23 der Armatur 5 liegt hier noch unterhalb der Übergangsabschrägung 19 und dichtet somit die Durchgangsbohrung 15 gegenüber der Einlassöffnung 14 ab. Man erkennt ausserdem, dass der Wulst 16a des ringartigen Dichtungselements 16 nunmehr von der Nut 21 in der Unterseite des zweiten, auswechselbaren Stutzenelements 2 sowie von der Nut 22 im Aufnahmeboden 18 des ersten, stationären Stutzenelements 1 aufgenommen ist und so eine besonders wirksame Abdichtung des ersten, stationären Stutzenelements 1 gegenüber dem zweiten, auswechselbaren Stutzelement 2 geschaffen wird. Das ringartige Dichtungselement 16 fungiert dabei sozusagen als Sitz für das zweite, auswechselbare Stutzenelement 2. Es erstreckt sich daher bevorzugt auch teilweise in den zwischen dem zweiten, auswechselbaren Stutzenelement 2 und der Innenseite des ersten, stationären Stutzenelements 1 gebildeten Ringspalt 27 hinein.

**Fig. 3** stellt eine perspektivische Ansicht einer mittels einer erfindungsgemässen Stutzenanordnung in einer Behälterwandung 31 montierten Armatur 5 (bzw. Sensor) bereit. Man erkennt insbesondere die Scharniereinheit 3a der Klemmvorrichtung 3 sowie die entsprechende Festziehschraube 3b, über welche der auf die Flansche auszuübende Anpressdruck eingestellt werden kann. Der Sprengring 31 ist am oberen Ende der Armatur bzw. des Sensors 5 angeordnet, d.h. etwas oberhalb von der Oberseite der Überwurfmutter 8. Das Griffteil 7 ragt nach aussen von der Armatur 5 ab.

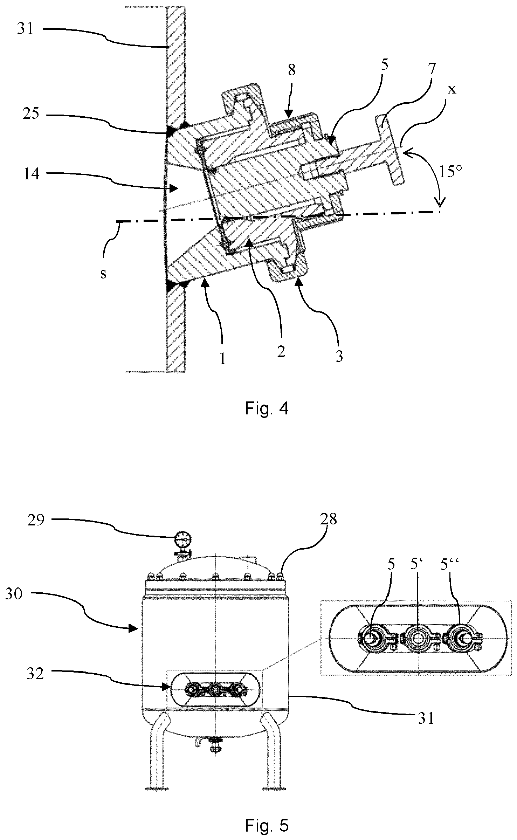

Anhand der **Fig. 4** wird eine bevorzugte, schräg aufwärts gerichtete Einbaulage der erfindungsgemässen Stutzenanordnung sowie der Armatur bzw. des Sensors 5 illustriert. Wie zu sehen, schliesst dabei eine Senkrechte s zur Behälterwandung 31 einen Winkel von 15° mit der Längsachse x der Armatur bzw. des Sensors 5 ein. Man spricht hier auch von einer Steigung von 15°. Das erste, stationäre Stutzenelement 1 sowie seine sich zur Innenseite des Prozessbehälters erweiternde Einlassöffnung 14 sind entsprechend geometrisch an diese Einbaulage angepasst. Die Vorteile einer solchen Schrägstellung wurden bereits oben in der allgemeinen Beschreibung erörtert. Im Übrigen ändert sich allerdings im Hinblick auf die Funktionalität der erfindungsgemässen Stutzenanordnung nichts.

Schliesslich wird in **Fig. 5** noch ein erfindungsgemässer Prozessbehälter 30 mit einem in der Behälterwand 31 vorgesehenen Anschlussbereich 32 für mehrere (hier drei) ggf. unterschiedliche Armaturen bzw. Sensoren 5, 5', 5" gezeigt. Beispielsweise kann es sich dabei um Sensoren bzw. Sonden für eine pH-Messung, eine TemperaturMessung, eine Sauerstoff oder eine CO₂-Messung oder dergleichen handeln. Auf dem Deckel des Prozessbehälters 31 ist etwa ein Druckanzeiger 29 angeordnet. Ausserdem erkennt man noch die Verschraubung 28 des Deckels.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können.

Die vorliegende Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die blosse Tatsache, dass bestimmte Masse in zueinander verschiedenen abhängigen Ansprüchen aufgeführt sind, bedeutet nicht, dass eine Kombination dieser Masse nicht vorteilhaft verwendet werden kann. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen.

### Liste der Bezugszeichen-.

- 1: erstes, stationäres Stutzenelement
- 2: zweites, auswechselbares Stutzenelement
- 3: Klemmvorrichtung
- 3a: Scharniereinheit
- 3b: Festziehschraube
- 4: Aufnahmeöffnung (erstes, stationäre Stutzenelement)
- 5: Armatur/Sensor
- 6: Aussengewinde (zweites, auswechselbares Stutzenelement)
- 7: Griffteil
- 8: Überwurfmutter
- 9: umlaufender Flansch (zweites, auswechselbares Stutzenelement)
- 9a: Abschrägung
- 10: Aussparung
- 11: umlaufender Flansch (erstes, stationäres Stutzenelement)
- 11a: Abschrägung
- 12: Vorsprung
- 13: Sprengring
- 14: Einlassöffnung
- 15: Durchgangsbohrung (zweites, auswechselbares Stutzenelement)
- 16: ringartiges Dichtungselement
- 16a: Wulst
- 17: umlaufender Wulst
- 18: Aufnahmeboden (erstes, stationäres Stutzenelement)
- 19: Übergangabschrägung (d1/d2)
- 20: Innengewinde Überwurfmutter
- 21: Nut Unterseite (zweites, auswechselbares Stutzenelement)
- 22: Nut Aufnahmeboden (erstes, stationäres Stutzenelement)
- 23: O-Ring Sensor/Armatur
- 24: Sockel Armatur/Sensor
- 25: Schweissnähte
- 26: Ringspalt (Durchgangsbohrung/Armatur)
- 27: Ringspalt (Aufnahmeöffnung/zweites, auswechselbares Stutzenelement)
- 28: Verschraubung Prozessbehälterdeckel
- 29: Druckanzeiger
- 30: Prozessbehälter
- 31: Behälterwand
- 32: Anschlussbereich
- s: Senkrechte zur Behälterwand
- x: Längsachse (Armatur/Sensor)
- d1: grösserer Innendurchmesser Durchgangsbohrung
- d2: kleinerer Innendurchmesser Durchgangsbohrung
- d3: Innendurchmesser Aufnahmeöffnung
- d4: Aussendurchmesser (aufgenommener Teil zweites, auswechselbares Stutzenelement)

## Patentansprüche

1. Stutzenanordnung zum Prozessanschluss von einer Armatur oder einem Sensor (5) aufweisend ein erstes, stationäres Stutzenelement (1) und ein zweites, auswechselbares Stutzenelement (2) welches derart ausgebildet ist, dass es zumindest teilweise von einer Aufnahmeöffnung (4) des ersten, stationären Stutzenelements (1) aufnehmbar ist, wobei das zweite, auswechselbare Stutzenelement (2) ein Aussengewinde (6) zum Aufbringen einer Überwurfmutter (8) der Armatur oder des Sensors (5) aufweist, sowie zumindest eine Haltevorrichtung (3), welche zum Zusammenhalten des ersten, stationären Stutzenelements (1) und des zweiten, auswechselbaren Stutzenelements (2) ausgebildet ist.

2. Stutzenanordnung nach Anspruch 1, wobei das zweite, auswechselbare Stutzenelement (2) einen umlaufenden Flansch (9) aufweist, welcher zumindest einen Vorsprung oder zumindest eine Aussparung (10) umfasst, der/die mit zumindest einer gegengleichen Aussparung oder mit zumindest einem gegengleichen Vorsprung (12) eines umlaufenden Flansches (11) des ersten, stationären Stutzenelements (1) einen Formschluss bildet.

3. Stutzenanordnung nach Anspruch 2, wobei der umlaufende Flansch (11) des ersten, stationären Stutzenelements (1) und der umlaufende Flansch (9) des zweiten, auswechselbaren Stutzenelements (2) jeweils eine Abschrägung (9a, 11a) aufweisen, so dass sich im montierten Zustand der zusammengesetzte Flansch nach aussen hin verjüngt.

4. Stutzenanordnung nach Anspruch 2 oder 3, wobei die Haltevorrichtung (3) dazu ausgebildet ist, den Flansch (11) des ersten, stationären Stutzenelements (1) und den Flansch (9) des zweiten, auswechselbaren Stutzenelements (2) klemmend zu umschliessen und zusammenzupressen.

5. Stutzenanordnung nach einem der vorhergehenden Ansprüche, wobei die Aufnahmeöffnung (4) des ersten, stationären Stutzenelements (1) eine Einlassöffnung (14) umfasst, welche derart ausgebildet ist, dass die Armatur oder der Sensor (5) durch sie hindurchführbar ist.

6. Stutzenanordnung nach Anspruch 5, wobei das zweite, auswechselbare Stutzenelement (2) eine Durchgangsbohrung (15) aufweist, welche mit der Einlassöffnung (14) des ersten, stationären Stutzenelements (1) korrespondiert.

7. Stutzenanordnung nach Anspruch 6, wobei die Durchgangsbohrung (15) des zweiten, auswechselbaren Stutzenelements (2) einen abgeschrägten Übergangsbereich (19) zwischen einem Bohrungsabschnitt mit einem grösseren Innendurchmesser (d1) und einem Bohrungsabschnitt mit einem kleineren Innendurchmesser (d2) aufweist, wobei der Bohrungsabschnitt mit dem kleineren Innendurchmesser (d2) fluchtend angrenzt an die Einlassöffnung (14) des ersten, stationären Stutzenelements (1).

8. Stutzenanordnung nach Anspruch 7, wobei der kleinere Innendurchmesser (d2) 25 mm mit einer Toleranz von H7 oder 40 mm mit einer Toleranz von H7 beträgt.

9. Stutzenanordnung nach einem der vorhergehenden Ansprüche, wobei der Aussendurchmesser (d4) des von dem ersten, stationären Stutzenelement (1) aufgenommenen Teils des zweiten, auswechselbaren Stutzenelements (2) kleiner ist als der Innendurchmesser (d3) der Aufnahmeöffnung (4) des ersten, stationären Stutzenelements (1).

10. Stutzenanordnung nach einem der vorhergehenden Ansprüche, wobei zwischen dem ersten, stationären Stutzenelement (1) und dem zweiten, auswechselbaren Stutzenelement (2) ein ringartiges Dichtungselement (16) angeordnet ist.

11. Stutzenanordnung nach Anspruch 10, wobei das ringartige Dichtungselement (16) einen Sitz für das zweite, auswechselbare Stutzenelement (2) ausbildet, wobei es im montierten Zustand dessen Seitenwände jedenfalls im unteren Bereich dichtend umgibt.

12. Stutzenanordnung nach Anspruch 10 oder 11, wobei das ringartige Dichtungselement (16) einen umlaufenden Wulst (16a) aufweist, welcher von korrespondierenden Nuten (21, 22) an einer Unterseite des zweiten, auswechselbaren Stutzenelements (2) und einem Aufnahmeboden (18) des ersten, stationären Stutzenelements (1) dichtend aufgenommen wird.

13. Prozessbehälter aufweisend zumindest eine Stutzenanordnung gemäss einem der vorhergehenden Ansprüche, sowie eine Armatur oder einen Sensor (5), wobei das erste, stationäre Stutzenelement (1) der Stutzenanordnung in eine Wandung (31) des Prozessbehälters (30) eingeschweisst ist.

14. Prozessbehälter nach Anspruch 13, wobei an einem ihrem/seinem Sockel (19) zugewandten Ende der Armatur oder des Sensors (5) ein Sprengring (13) angeordnet ist, mittels welchem die Armatur oder der Sensor (5) beim Herausdrehen einer Überwurfmutter (8) zurückgeschoben wird.

15. Prozessbehälter nach Anspruch 13 oder 14, wobei das erste, stationäre Stutzenelement (1) eine aufwärtige Neigung von etwa 15 % gegenüber einer Senkrechten (s) zur Behälterwand (31) aufweist.

## Claims

1. Nozzle arrangement for the process connection of a fitting or a sensor (5), comprising a first, stationary nozzle element (1) and a second, replaceable nozzle element (2) configured to be at least partly received by a receiving opening (4) of the first, stationary nozzle element (1), wherein the second, replaceable nozzle element (2) has an external thread (6) for applying a union nut (8) of the fitting or the sensor (5), and at least one holding device (3) configured to hold together the first, stationary nozzle element (1) and the second, replaceable nozzle element (2).

2. Nozzle arrangement according to claim 1, wherein the second, replaceable nozzle element (2) has a circumferential flange (9) which comprises at least one projection or at least one recess (10) which forms a form-fitting connection with at least one opposite recess or with at least one opposite projection (12) of a circumferential flange (11) of the first, stationary nozzle element (1).

3. Nozzle arrangement according to claim 2, wherein the circumferential flange (11) of the first, stationary nozzle element (1) and the circumferential flange (9) of the second, replaceable nozzle element (2) each have a bevel (9a, 11a) so that the assembled flange tapers toward the outside in the assembled state.

4. Nozzle arrangement according to claim 2 or 3, wherein the holding device (3) is configured to clamp and press together the flange (11) of the first, stationary nozzle element (1) and the flange (9) of the second, replaceable nozzle element (2).

5. Nozzle arrangement according to any of the preceding claims, wherein the receiving opening (4) of the first, stationary nozzle element (1) comprises an inlet opening (14) configured such that the fitting or the sensor (5) can be passed through it.

6. Nozzle arrangement according to claim 5, wherein the second, replaceable nozzle element (2) has a through-hole (15) which corresponds to the inlet opening (14) of the first, stationary nozzle element (1).

7. Nozzle arrangement according to claim 6, wherein the through-hole (15) of the second, replaceable nozzle element (2) has a beveled transition region (19) between a hole portion having a larger inner diameter (d1) and a hole portion having a smaller inner diameter (d2), wherein the hole portion having the smaller inner diameter (d2) adjoins the inlet opening (14) of the first, stationary nozzle element (1).

8. Nozzle arrangement according to claim 7, wherein the smaller inner diameter (d2) is 25 mm with a tolerance of H7 or 40 mm with a tolerance of H7.

9. Nozzle arrangement according to any of the preceding claims, wherein the external diameter (d4) of the part of the second, replaceable nozzle element (2) received by the first, stationary nozzle element (1) is smaller than the inner diameter (d3) of the receiving opening (4) of the first, stationary nozzle element (1).

10. Nozzle arrangement according to any of the preceding claims, wherein an annular sealing element (16) is arranged between the first, stationary nozzle element (1) and the second, replaceable nozzle element (2).

11. Nozzle arrangement according to claim 10, wherein the annular sealing element (16) forms a seat for the second, replaceable nozzle element (2), wherein the sealing element sealingly surrounds its side walls in the lower region in the assembled state.

12. Nozzle arrangement according to claim 10 or 11, wherein the annular sealing element (16) has a circumferential bead (16a) which is sealingly received by corresponding grooves (21, 22) on an underside of the second, replaceable nozzle element (2) and a receiving floor (18) of the first, stationary nozzle element (1).

13. Process container comprising at least one nozzle arrangement according to any of the preceding claims and a fitting or a sensor (5), wherein the first, stationary nozzle element (1) of the nozzle arrangement is welded into a wall (31) of the process container (30).

14. Process container according to claim 13, wherein a snap ring (13) is arranged at an end of the fitting or the sensor (5) facing its base (19), by means of which snap ring (13) the fitting or the sensor (5) is pushed back when a union nut (8) is unscrewed.

15. Process container according to claim 13 or 14, wherein the first, stationary nozzle element (1) has an upward inclination of approximately 15% relative to a vertical (s) to the container wall (31).

## Revendications

1. Ensemble pièce de raccordement destiné au raccordement de traitement d'un raccord ou d'un capteur (5), présentant un premier élément de pièce de raccordement fixe (1) et un second élément de pièce de raccordement remplaçable (2), lequel est conçu de manière à pouvoir être reçu au moins partiellement par une ouverture de réception (4) du premier élément de pièce de raccordement fixe (1), dans lequel le second élément de pièce de raccordement remplaçable (2) présente un filetage extérieur (6) permettant d'appliquer un écrou d'accouplement (8) du raccord ou du capteur (5) ainsi qu'au moins un dispositif de maintien (3), lequel est conçu pour maintenir ensemble le premier élément de pièce de raccordement fixe (1) et le second élément de pièce de raccordement remplaçable (2).

2. Ensemble pièce de raccordement selon la revendication 1, dans lequel le second élément de pièce de raccordement remplaçable (2) présente une bride périphérique (9), laquelle comprend au moins une saillie ou au moins un évidement (10) qui forme une complémentarité de forme avec au moins un évidement équivalent ou avec au moins une saillie équivalente (12) d'une bride périphérique (11) du premier élément de pièce de raccordement fixe (1).

3. Ensemble pièce de raccordement selon la revendication 2, dans lequel la bride périphérique (11) du premier élément de pièce de raccordement fixe (1) et la bride périphérique (9) du second élément de pièce de raccordement remplaçable (2) présentent respectivement un biseau (9a, 11a) de sorte que la bride composite s'effile vers l'extérieur à l'état monté.

4. Ensemble pièce de raccordement selon la revendication 2 ou 3, dans lequel le dispositif de maintien (3) est conçu pour entourer par serrage la bride (11) du premier élément de pièce de raccordement fixe (1) et la bride (9) du second élément de pièce de raccordement remplaçable (2) et pour les comprimer.

5. Ensemble pièce de raccordement selon l'une des revendications précédentes, dans lequel l'ouverture de réception (4) du premier élément de pièce de raccordement fixe (1) comprend une ouverture d'entrée (14), laquelle est conçue de manière à pouvoir être traversée par le raccord ou le capteur (5).

6. Ensemble pièce de raccordement selon la revendication 5, dans lequel le second élément de pièce de raccordement remplaçable (2) présente un alésage de passage (15) lequel correspond à l'ouverture d'entrée (14) du premier élément de pièce de raccordement fixe (1).

7. Ensemble pièce de raccordement selon la revendication 6, dans lequel l'alésage de passage (15) du second élément de pièce de raccordement remplaçable (2) présente une zone de transition (19) biseautée entre une section d'alésage comportant un diamètre intérieur (d1) plus grand et une section d'alésage comportant un diamètre intérieur (d2) plus petit, dans lequel la section d'alésage comportant le diamètre intérieur (d2) plus petit affleure l'ouverture d'entrée (14) du premier élément de pièce de raccordement fixe (1).

8. Ensemble pièce de raccordement selon la revendication 7, dans lequel le diamètre intérieur (d2) plus petit est de 25 mm avec une tolérance de H7 ou de 40 mm avec une tolérance de H7.

9. Ensemble pièce de raccordement selon l'une des revendications précédentes, dans lequel le diamètre extérieur (d4) de la partie du second élément de pièce de raccordement remplaçable (2) reçue par le premier élément de pièce de raccordement fixe (1) est inférieur au diamètre intérieur (d3) de l'ouverture de réception (4) du premier élément de pièce de raccordement fixe (1).

10. Ensemble pièce de raccordement selon l'une des revendications précédentes, dans lequel un élément d'étanchéité annulaire (16) est disposé entre le premier élément de pièce de raccordement fixe (1) et le second élément de pièce de raccordement remplaçable (2).

11. Ensemble pièce de raccordement selon la revendication 10, dans lequel l'élément d'étanchéité annulaire (16) forme un siège pour le second élément de pièce de raccordement remplaçable (2), dans lequel, à l'état monté, ledit siège entoure de manière étanche les parois latérales du second élément de pièce de raccordement remplaçable, du moins dans la zone inférieure.

12. Ensemble pièce de raccordement selon la revendication 10 ou 11, dans lequel l'élément d'étanchéité annulaire (16) présente un renflement périphérique (16a), lequel est reçu de manière étanche, par des rainures correspondantes (21, 22), sur un côté inférieur du second élément de pièce de raccordement remplaçable (2) et sur une base de réception (18) du premier élément de pièce de raccordement fixe (1).

13. Récipient de traitement présentant au moins un ensemble pièce de raccordement conformément à l'une des revendications précédentes, ainsi qu'un raccord ou un capteur (5), dans lequel le premier élément de pièce de raccordement fixe (1) de l'ensemble pièce de raccordement est soudé dans une paroi (31) du récipient de traitement (30).

14. Récipient de traitement selon la revendication 13, dans lequel un anneau élastique (13) est disposé sur une extrémité du raccord ou du capteur (5) opposée à son embase (19), l'anneau élastique permettant de rétracter le raccord ou le capteur (5) lors du dévissage d'un écrou d'accouplement (8).

15. Récipient de traitement selon la revendication 13 ou 14, dans lequel le premier élément de pièce de raccordement fixe (1) présente une inclinaison vers le haut d'environ 15 % par rapport à une verticale (s) à la paroi de récipient (31).
